# EUROPEAN PATENT APPLICATION

(11) **EP 4 053 982 A1**
(43) Date of publication of application: **07.09.2022**
(21) Application number: 21160876.5
(22) Date of filing: 05.03.2021
(51) Int. Cl.: H01M 50/271, H01M 50/109, H05K 5/00

(54) **TOOL WITH REPACEABLE BATTERY**

(71) Applicant: HUSQVARNA AB, 561 82 Huskvarna (SE)
(72) Inventor: Sauter, Thomas, 89150 Laichingen (DE); Scherer, Gabriele, 89197 Weidenstetten (DE)
(74) Representative: Finkele, Rolf

(57) **Abstract**

The tool **(100)** embodying an electric circuit powered by a button cell battery **(150).** The tool **(100)** includes a housing **(110)** and a cover **(120)** for covering the button cell battery **(150)** within the housing **(110).** The cover **(120)** is operatively coupled to the housing **(110).** The cover **(120)** includes a groove **(130)** to manipulate the cover **(120).** The tool **(100)** is characterized in that the groove **(130)** has an engaging profile **(132)** defined between two ends **(134, 136)** of the groove **(130).** The engaging profile **(132)** is such that at least a part of the button cell battery **(150)** engages with the engaging profile **(132)** of the groove **(130)** to manipulate the cover **(120).** Further, a depth **(D)** of the engaging profile **(132)** of the groove **(130)** between the two ends **(134, 136)** is deeper than at the two ends **(134, 136)** of the groove **(130).**

## Description

### TECHNICAL FIELD

The present disclosure relates to a tool. More specifically, the present disclosure relates to a tool with a replaceable battery.

### BACKGROUND

Tools such as a water meter, are known that are generally powered by a battery (say a button cell battery). These tools generally include a battery housing that houses the replaceable battery. The battery housing further includes a cover, which is coupled to the battery housing. The cover further includes different opening features, which are used to assemble or disassemble the cover. This allows to gain access within the housing, post removal of the cover, to check or remove the battery. In some cases, the opening features on the cover may be embodied as one or more of a groove, a hole, and the like to assemble or disassemble the cover, such as with application of some external component (say a plier, a screwdriver, a coin etc.)

The groove may be generally rectangular in cross-section and have a flat profile. Such grove may require application of the screwdriver or the coin to be inserted in the grove to rotate and gain access within the cover. The problem however lies with the unavailability and other implementation constrains (say storage, transportation) of the screwdriver or the coin as a common user may not always carry these external component. Hence, there is a need for an improved tool which may allow easy and user-friendly battery replacement without use of any external component such as the screwdriver or the coin.

An example of a tool is provided in Chinese Patent 212,482,599 (hereinafter referred to as '599 reference). The '599 reference discloses an intelligent water meter, which includes a shell provided with an opening. A battery compartment is arranged in the shell, and the battery compartment is communicated with the opening. A cover body is fixed on the periphery of the opening of the shell and includes an upper window used for taking out the battery at the position corresponding to the bin. The cover body is detachably fixed with an upper cover for covering the upper window. The cover body is provided with a through pipe, and the upper window is arranged on the through pipe. The cover is an inner plug and includes an end surface portion and a peripheral side portion. The end face of the inner plug is provided with a cross-shaped groove. The width of the cross groove may allow a coin, key, or portion of a hard card to be caught therein and the inner plug to be separated from the through tube by a relatively hard tool such as a coin. The '599 reference discloses about opening the cover of the battery housing involving a complex, multi-part arrangement. Further, the housing seems to use external components (such as the coin) or flat-surface tools and does not solve the problem at hand. Further, the cross groove of the '599 reference seems to have a generally flat, and rectangular profile which may lead to less ergonomic, complex and high-skill based opening of the cover of the battery housing, due to application of the external components.

### SUMMARY

In view of the above, it is an objective of the present disclosure to solve or at least reduce the drawbacks discussed above. The objective is at least partially achieved by a new design of a tool. The tool embodying an electric circuit powered by a button cell battery. The tool includes a housing and a cover for covering the button cell battery within the housing. The cover is operatively coupled to the housing. The cover includes a groove to manipulate the cover. The tool is characterized in that the groove has an engaging profile defined between two ends of the groove. The engaging profile is such that at least a part of the button cell battery engages with the engaging profile of the groove to manipulate the cover. Further, a depth of the engaging profile of the groove between the two ends is deeper than at the two ends of the groove.

Thus, the present disclosure provides an improved design of the tool. The tool allows simple, easy, and user-friendly replacement of the button cell battery, which is covered by the cover. The cover includes the groove to manipulate the cover using the button cell battery itself, without application of any external component. Hence, there is no requirement of storage, transportation, and maintenance of the external components such as a screwdriver or a coin or the like. Thus, the common user may not be required to have access and skill involved with working of different external component for the button cell battery replacement.

According to an embodiment of the present disclosure, the cover is threadably coupled to the housing. In this arrangement, the cover is removably coupled to the housing by thread type coupling which is generally effortless, and time saving. According to an embodiment of the present disclosure, the cover is coupled via a bayonet coupling to the housing. The use of the thread coupling, or the bayonet coupling may be based on a type, dimension, service life of the cover, the housing, or any component/part of the tool.

According to an embodiment of the present disclosure, the groove is at least 3. 2 mm wide. In this arrangement, the groove is wide enough to at least partially engage with the button cell battery so that the cover may be manipulated to an open state (to gain access within the battery housing). The width of the groove is enough to at least partially engage with the button cell battery and prevent inadvertent intrusion of any foreign matter such as dust, water and the like.

According to an embodiment of the present disclosure, the engaging profile of the groove is similar to a shape of the at least the part of the button cell battery. In this arrangement, the similarity in the engaging profile of the groove and the at least the part of the button cell battery ensures better engagement between the groove and the button cell battery. Hence, the common user may easily manipulate the cover leading to a safe, and simple replacement of the button cell battery.

According to an embodiment of the present disclosure, the engaging profile of the groove is one or more of a circular, semi-circular, curve shape. In this arrangement, the groove profile is similar to a shape of the at least the part of the button cell battery i.e., circular, semi-circular or curve shape for better engagement between the groove and the button cell battery. Hence, the tool operator easily manipulates the cover leading to easy and safe access within the housing for the button cell battery replacement and like operations. Also, the combination of one or more of such profiles of the groove allows application of different design, types, dimensions of the button cell battery, to desirably engage or manipulate with the groove.

According to an embodiment of the present disclosure, the groove includes at least one protrusion, where the at least one protrusion engages with the at least a part of the button cell battery to manipulate the cover. In this arrangement, the protrusion may be of any shape and size to strengthen or supplement the engagement between the groove and the button cell battery. The protrusion may also be used to counter any mismatch in the width, profile of the groove and the button cell battery. Furthermore, the protrusions may serve as a guide while inserting the button cell battery for manipulation of the cover.

According to an embodiment of the present disclosure, the tool is one or more of a water meter, a tachometer, and a water computer. In this arrangement, the improved design of tool facilitates opening of the cover of the battery housing of the button cell battery using the button cell battery itself and may be universally employed to any tool that requires battery powered operation thereof.

According to an embodiment of the present disclosure, the housing is operatively coupled to a hose connector and a tap connector. This allows application of the housing of the tool with different indoor and outdoor say gardening applications involving the hose connector and the tap connector.

Other features and aspects of this disclosure will be apparent from the following description and the accompanying drawings.

### BRIEF DESCRIPTION OF THE DRAWINGS

The disclosure will be described in more detail with reference to the enclosed drawings, wherein:
**FIG. 1** illustrates a perspective view of a tool, according to an embodiment of the present disclosure;
**FIG. 2** illustrates a perspective view of a tool along with a button cell battery, according to an embodiment of the present disclosure;
**FIG. 3** illustrates a front view of a cover on a housing of the tool, according to an embodiment of the present disclosure; and

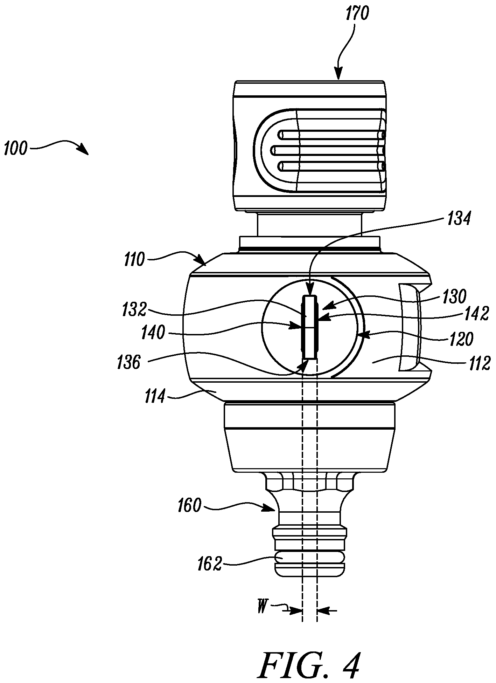

**FIG. 4** a front view of a tool, according to an embodiment of the present disclosure.

### DESCRIPTION OF EMBODIMENTS

The present disclosure will be described more fully hereinafter with reference to the accompanying drawings, in which example embodiments of the disclosure incorporating one or more aspects of the present disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. For example, one or more aspects of the present disclosure may be utilized in other embodiments and even other types of structures and/or methods. In the drawings, like numbers refer to like elements.

Certain terminology is used herein for convenience only and is not to be taken as a limitation on the disclosure. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

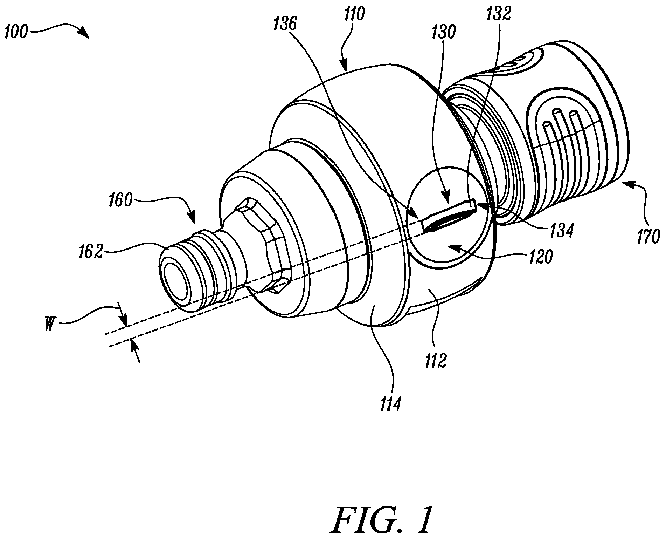

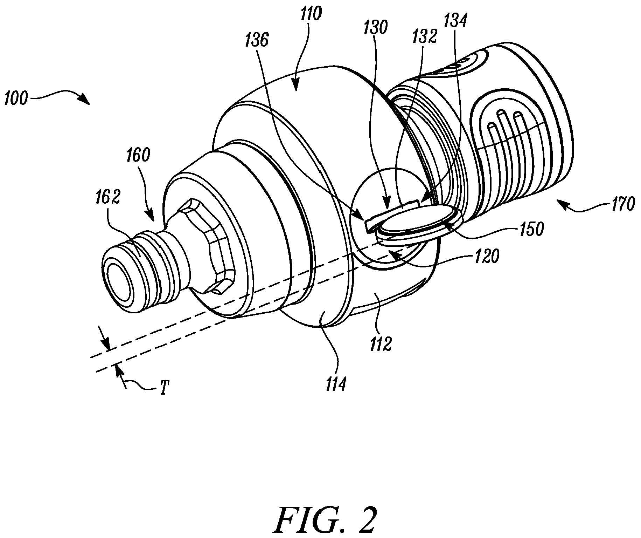

**FIG. 1** illustrates a perspective view of a tool **100.** The tool **100** may be any tool generally powered by one or more batteries, which are preferably replaceable batteries. The tool **100** embodies an electric circuit (not shown) powered by a button cell battery **150** (shown in **FIG. 2****).** The tool **100** includes a housing **110** and a cover **120** for covering the button cell battery **150** within the housing **110.** **FIG. 1** of the present disclosure does not illustrate the button cell battery **150** as the cover **120** is placed on the housing **110** to restrict access to the button cell battery **150.** The cover **120** is operatively coupled to the housing **110.** The cover **120** includes a groove **130** to manipulate (say assemble, disassemble and the like) the cover **120.** The tool **100** is such that the groove **130** has an engaging profile **132** defined between two ends i.e., a first end **134** and a second end **136** of the groove **130.** The engaging profile **132** is such that at least a part of the button cell battery **150** engages with the engaging profile **132** of the groove **130** to manipulate the cover **120,** as best illustrated in **FIG. 2****.**

As illustrated, the housing **110** is operatively coupled to a hose connector **170** and a tap connector **160.** This allows application of the housing **110** of the tool **100** with different indoor and outdoor say gardening applications involving the hose connector **170** and the tap connector **160.** The tap connector **160** includes a tap connector head **162** that may engage with a hose (not shown), a tap or other liquid (say water) source. The tool **100** may be readily implemented or connected with any connector, or gardening attachments as used or known in the art.

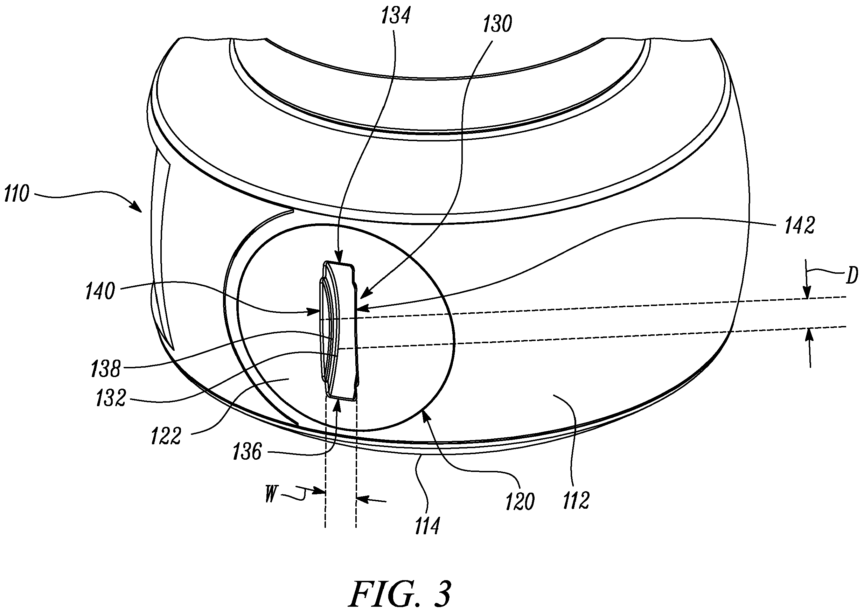

**FIGS. 2** and **3** illustrate the housing **110** and the cover **120** of the tool **100.** The housing **110** may include a button cell battery seat (not shown) and the button cell battery **150** is disposed inside the button cell battery seat. The button cell battery **150** is connected to the circuit board assembly to supply power thereto. The housing **110** includes the cover **120** on its annular portion **112** that may generally match or align with the button cell battery seat. The cover **120** couples with the housing **110** and shields the button cell battery **150** inside the housing **110.**

The cover **120** may be threadably, snap-fit, form-fit, or coupled in any technique or arrangement as used or known in the art, to the housing **110.** In some embodiments, the cover **120** is coupled via a bayonet coupling (not shown) to the housing **110.** The use of the thread coupling, or the bayonet coupling may be based on a type, dimension, service life of the cover **120,** the housing **110** or any component/part of the tool **100.** The cover **120** of the housing **110** further includes the groove **130** to manipulate the cover **120** to an open state (i.e., to gain access within the battery housing **110).**

In some embodiments, the housing **110** may include display system (say an LCD or a LED display). The display system may showcase various characteristics measured by the tool **100** (say water meter) or the working status of the tool **100** or any other important result or data, which may be helpful for the common user of the tool **100.**

In some embodiments, the housing **110** may include the lighting system on its annular portion **112** or the side portion **114** to make the tool **110** and its surroundings visible during night for the common user. The lighting system may be solar charged and may not consume energy from the button cell battery **150** and thereby prolong the service life of the tool **110.** In some embodiments, the housing **110** may include a frame (not shown) on its annular surface **112** to showcase and protect the company logo. The frame may be made from any transparent and pliable material. The frame may be sealed at its periphery to prevent entry of water or moisture inside the frame

In some embodiments, the cover **120** may include a protruding part (say a pillar and the like) abutting against the button cell battery **150** to facilitate pushing the button cell battery **150** tightly, and the button cell battery seat is isolated from the outside by the cover **120.** In some embodiments, the cover **120** may include a sealing ring (not shown) to protect the entry of water of water or moisture inside the housing **110.** The sealing ring may be an O-ring, washer, and the like, and made of a material including one or more of nitrile, silicone, neoprene, polyurethane, and other materials similar in nature.

In some embodiments, the cover **120** may be made from non-transparent material to hide the electronics inside the housing **110** and maintain aesthetic value of the tool **110.** The cover **120** may be made from a high-visibility, light-emitting or a fluorescent material to easily locate the groove **130** during low-light applications (such as at night).

In some embodiments, the cover **120** may further include an upper cover (not shown) to protect the cover from dust. The cover **120** and the upper cover may be coupled using any quick coupling method (say bayonet, snap-fit, push-fit coupling, and the like). The upper cover may be hingedly or pivotably coupled to the cover **120.**

**FIG. 3** illustrates the groove **130** of the cover **120.** The groove **130** is defined by the first end **134,** the second end **136,** a left wall **140** and a right wall **142.** The groove **130** has a width **"W"** and a depth **"D".** The engaging profile **132** of the groove **130** includes one or more step **138.** In some embodiments, each of the left wall **140** and the right wall **142** of the engaging profile **132** may be provided with the one or more step **138.** The step **138** of the engaging profile **132** may allow simple, efficient engagement of the groove **130** and the button cell battery **150.**

The width **"W"** of the groove **130** is generally defined by the left wall **140** and the right wall **14.** The depth **"D"** of the groove **130** is generally defined by a distance between the lowest point of the engaging profile **132** and a surface **122** of the cover **120.** The groove **130** has the depth **"D",** which is such that at least the part of the button cell battery **150** may be inserted in it for ensuring better engagement between the groove **130** and the button cell battery **150.** The groove **130** is at least 3.2 mm wide, i.e., the width **"W"** of the groove **130** maybe around 3.2 mm in accordance with dimensions such as a thickness **"T"** (shown in **FIG. 2****)** of the button cell battery **150,** in some embodiments. The width **"W"** of the groove **130** may preferably be similar, slightly larger, than the thickness "T" of the button cell battery **150.**

In some embodiments, the left wall **140** and the right wall **142** may be at least partially deformable or adjustable along the width **"W".** Such deformable or adjustable arrangement with provide better tolerance and ease of engagement of the button cell battery **150** therebetween. Further, the left wall **140** and the right wall **142** being deformable or adjustable may allow the width **"W"** of the groove **130** to adjust in accordance with different type, dimensions (say the thickness **"T"** of the button cell battery **150),** shape of any battery. In particular, the left wall **140** and the right wall **142** may be deformable or adjustable to allow the width **"W"** of the groove **130** to adjust in accordance with dimensions, say the thickness **"T"** of the button cell battery **150.**

In this arrangement as shown in **FIG. 3****,** the width **"W"** of the groove **130** is such that to at least partially engage with the button cell battery **150** (shown in **FIG. 2****)** and prevent inadvertent intrusion of any foreign agents such as dust, water, and the like. Further, the depth **"D"** the of the engaging profile **132** of the groove **130** between the two ends **134, 136** is deeper than at the two ends **134, 136** of the groove **130.**

The groove **130** of the present disclosure includes the engaging profile **132.** The engaging profile **132** of the groove **130** is similar to a shape of the at least the part of the button cell battery **150.** In this arrangement, the similarity in the engaging profile **132** of the groove **130** and the at least the part of the button cell battery **150** may ensure better engagement between the groove **130** and the button cell battery **150.** Hence, the common user may easily manipulate the cover **120** leading to a safe, and simple replacement of the button cell battery **150,** by manipulating the cover **120** using another button cell battery (not shown). The present disclosure illustrates and refers to the button cell battery **150** though the cover **120,** the groove **130,** or any other component and feature of the present disclosure may be readily implemented with any type, dimensions, shape of different batteries.

In some embodiments, the engaging profile **132** of the groove **130** is one or more of a circular, semi-circular, curve shape. In this arrangement, the groove **130** profile is similar to a shape of the at least the part of the button cell battery **150** i.e., circular, semi-circular or curve shape for better engagement between the groove **130** and the button cell battery **150.** So, the common user of the tool **100** may easily manipulate the cover **120** leading to easy and safe access within the housing **110** for the button cell battery **150** replacement and like operations. Also, the combination of one or more of such profiles of the groove **130** allows application of different design, types, dimensions of the button cell battery **150,** to desirably engage or manipulate with the groove **130.**

In some embodiments, the grove **130** may include a detection arrangement or mechanism to identify insertion of the button cell battery **150** therein. Such detection arrangement or mechanism may allow a safe, reliable, and efficient check or confirmation for authorized manipulation of the cover **120** having the groove **130** by the button cell battery **150.** In some embodiments, a part of the grove **130** may be provided with a sensor, magnetic, electronic and like means to check, confirm, or detect placement of the at least a part of the button cell battery **150** within the groove **120.** The tool **100** may then allow manipulation of the cover, based on detection of the button cell battery **150** to manipulate the cover **120.**

In some embodiments, the groove **130** includes at least one protrusion (not shown), where the at least one protrusion engages with the at least a part of the button cell battery **150** to manipulate the cover **120.** In this arrangement, the protrusion may be of any shape and size to strengthen or supplement the engagement between the groove **130** and the button cell battery **150.** The protrusion may also be used to counter any mismatch in the width, profile of the groove **130** and the button cell battery **150.** Furthermore, the protrusions may serve as a guide while inserting the button cell battery **150** for manipulation of the cover **120.**

In some embodiments, the groove **130** and the cover **120** may be manufactured together or manufactured separately and assembled using any manufacturing method as used or known in the art. The groove **130** may be made of a metal, polymer or any other material as used or known in the art. The groove **130** may have a good surface finish or profile to avoid any damage or distortion to the button cell battery **150** when the button cell battery **150** is inserted in the groove **130.**

The tool **100** of the present disclosure may be one or more of a water meter, a tachometer, and a water computer. The improved design of the tool **100** facilitates opening of the cover **120** of the battery housing **110** of the button cell battery **150** using the button cell battery **150** itself and may be universally employed to any tool **100** that requires battery powered operation thereof. Thus, the present disclosure provides the tool **100** which allows simple, easy, and user-friendly replacement of the button cell battery **150,** which is covered by the cover **120.** The cover **120** includes the groove **130** to manipulate the cover **120** using the button cell battery **150** itself, without application of any external component/tool/accessory. Hence, there is no requirement of storage, transportation, and maintenance of the external components such as a screwdriver or a coin or the like. Thus, the common user may not be required to have access and skill involved with working of different external component for the button cell battery **150** replacement.

In the drawings and specification, there have been disclosed preferred embodiments and examples of the disclosure and, although specific terms are employed, they are used in a generic and descriptive sense only and not for the purpose of limitation of the scope of the disclosure being set forth in the following claims.

### LIST OF ELEMENTS

- **100**: Tool
- **110**: Housing
- **112**: Annular Portion
- **114**: Side Portion
- **120**: Cover
- **122**: Surface
- **130**: Groove
- **132**: Engaging Profile
- **134**: First End
- **136**: Second End
- **138**: Step
- **140**: Left Wall
- **142**: Right Wall
- **150**: Button Cell Battery
- **160**: Tap Connector
- **162**: Tap Connector Head
- **170**: Hose Connector
- **D**: Depth
- **T**: Thickness
- **W**: Width

## Claims

1. A tool **(100)** embodying an electric circuit powered by a button cell battery **(150),** the tool **(100)** comprising
a housing **(110);**
a cover **(120)** for covering the button cell battery **(150)** within the housing **(110),** wherein the cover **(120)** is operatively coupled to the housing **(110),** and
wherein the cover **(120)** includes a groove **(130)** to manipulate the cover **(120);**
**characterized in that:**
the groove **(130)** has an engaging profile **(132)** defined between two ends **(134, 136)** of the groove **(130),**
wherein the engaging profile **(132)** is such that at least a part of the button cell battery **(150)** engages with the engaging profile **(132)** of the groove (130) to manipulate the cover **(120),** and
wherein a depth **(D)** of the engaging profile **(132)** of the groove **(130)** between the two ends **(134, 136)** is deeper than at the two ends **(134, 136)** of the groove **(130).**

2. A tool **(100)** of claim 1, wherein the cover **(120)** is threadably coupled to the housing **(110).**

3. A tool **(100)** of claim 1, wherein the cover **(120)** is coupled via a bayonet coupling to the housing **(110).**

4. A tool **(100)** of any of the preceding claims, wherein the groove **(130)** is at least 3.2 mm wide.

5. A tool **(100)** of any of the preceding claims, wherein the engaging profile **(132)** of the groove **(130)** is similar to a shape of the at least the part of the button cell battery **(150).**

6. A tool **(100)** of any of the preceding claims, wherein the engaging profile **(132)** of the groove **(130)** is one or more of a circular, semi-circular, curve shape.

7. A tool **(100)** of any of the preceding claims, wherein groove **(130)** includes at least one protrusion, wherein the at least one protrusion engages with the at least a part of the button cell battery **(150)** to manipulate the cover **(120).**

8. A tool **(100)** of any of the preceding claims, wherein the tool **(100)** is one or more of a water meter, a tachometer, and a water computer.

9. A tool **(100)** of any of the preceding claims, wherein the housing **(110)** is operatively coupled to a hose connector **(170)** and a tap connector **(160).**
